# EUROPÄISCHE PATENTSCHRIFT

(11) **EP 2 054 707 B1**
(45) Veröffentlichungstag und Bekanntmachung des Hinweises auf die Patenterteilung: **22.05.2013**
(21) Anmeldenummer: 07786623.4
(22) Anmeldetag: 08.08.2007
(51) Int. Cl.: G01M 17/02

(54) **GLEICHFÖRMIGKEITS-MESSMASCHINE FÜR FAHRZEUGREIFEN**
MEASUREMENT MACHINE FOR DETERMINING THE UNIFORMITY OF VEHICLE TIRES
MACHINE MESURANT L'UNIFORMITE DE PNEUMATIQUES DE VEHICULES

(30) Priorität: 19.08.2006 DE 102006038733
(43) Veröffentlichungstag der Anmeldung: 06.05.2009
(73) Patentinhaber: inmess GmbH, 28309 Bremen (DE)
(72) Erfinder: SCHRAUDOLF, Siegfried, 64404 Bickenbach (DE); MOTZKUS, Andreas, 55276 Oppenheim (DE); NEUMANN, Erwin, 64521 Gross-Gerau (DE)
(74) Vertreter: Katscher Habermann Patentanwälte
(86) Internationale Anmeldenummer: PCT/EP2007/007016
(87) Internationale Veröffentlichungsnummer: WO 2008/022711

(56) Entgegenhaltungen:
- WO-A-88/03866
- DE-A1- 2 401 279
- DE-A1- 2 715 111
- DE-A1- 3 231 852
- DE-A1- 10 138 846
- US-A- 4 173 850

## Beschreibung

Die Erfindung betrifft eine Gleichförmigkeits-Messmaschine zur Bestimmung von Radial- und Lateralkraftschwankungen von Fahrzeugreifen, die jeweils auf einer in einem Maschinengestell gelagerten, antreibbaren Tragspindel aufgenommen sind und an einer drehbaren Lauftrommel abrollen, die über Kraftmesselemente an dem Maschinengestell gelagert ist, wobei die Drehachse der Tragspindel horizontal angeordnet ist, die Drehachse der Lauftrommel horizontal in einer die Drehachse der Tragspindel enthaltenden vertikalen Ebene unterhalb der Tragspindel angeordnet ist, und die Lauftrommel eine Trommelwelle aufweist, deren beide Trommelwellenlager jeweils über eines der Kraftmesselemente abgestützt sind.

An die Laufruhe von Fahrzeugreifen werden zunehmend höhere Anforderungen gestellt. Daher besteht ein Bedürfnis, die Laufgleichförmigkeit von Fahrzeugreifen auf Prüfständen zu erfassen und durch Messung der zwischen dem Fahrzeugreifen und der Lauftrommel auftretenden Radialkräfte und Lateralkräfte deren Schwankungen zu erfassen. Neben der Messung der Kraftschwankungen, die beim Abrollen des Rades entstehen, besteht eine wichtige Aufgabe dieser Gleichförmigkeits-Messmaschinen darin, aus den statischen lateralen Kräften die Konuskraft und den sog. Winkeleffekt zu bestimmen. Mit "statischen Kräften" wird in diesem Zusammenhang der sich über eine Umdrehung ergebende Mittelwert der Kräfte bezeichnet.

Bei bekannten Gleichförmigkeits-Messmaschinen sind die die Messfelge tragende, antreibbare Tragspindel und die Lauftrommel jeweils mit vertikaler Drehachse nebeneinander angeordnet. Der Platzbedarf dieser Messmaschinen ist daher verhältnismäßig hoch.

In radialer Richtung des Fahrzeugreifens werden nur Kraftschwankungen gemessen. Im Gegensatz dazu wird in lateraler Richtung auch der statische Anteil zur Berechnung der Messergebnisse gemessen. Somit geht eine Vorlast in radialer Richtung nicht direkt als Störgröße in das Messergebnis ein. Bei einer vertikalen Aufhängung geht die Gewichtskraft direkt als Störgröße in die Messung der lateralen Kräfte ein. Dies ist insbesondere bei Schwingungen im Boden, beispielsweise wenn ein Stapler vorbeifährt, eine starke Fehlerquelle, da sich die Messgröße der Schwankungen und die Störungen durch Massenträgheitskräfte der Lauftrommel in der gleichen Größenordnung bewegen können.

Die Nachteile der bekannten vertikalen Aufhängung werden besonders deutlich, wenn man die Größenverhältnisse der Gewichte und Kräfte berücksichtigt. Das Gewicht eines Lastrades mit Lagerung beträgt üblicherweise rund 50-60 kg. Die statischen Seitenkräfte betragen üblicherweise 300-400 N, bei modernen Breitreifen auch 600-800 N. Der Messbereich der Maschine in lateraler Richtung ist üblicherweise 1000 N. Die Anpresskräfte liegen üblicherweise im Bereich von 4000 N - 6000 N. Der Anpressdruck muss üblicherweise bis 10000 N einstellbar sein. Die Schwankungen in lateraler Richtung betragen üblicherweise rund 20 N, in radialer Richtung rund 130 N.

Bei vertikaler Lagerung des zu prüfenden Fahrzeugreifens tritt eine Gewichtskraft von rund 600 N auf, die sich direkt den gemessenen lateralen Kräften überlagert. Damit ist die Störgröße fast genau so groß wie die Messgröße. Dies bedeutet, dass man den Messbereich der Kraftaufnehmer doppelt so groß wählen muss wie es eigentlich erforderlich wäre. Damit verschlechtern sich die Auflösung und Messgenauigkeit um 100 %. Eine derartige Messvorrichtung wird beispielsweise in DE 32 31 852 A1 beschrieben.

Die Kräfte in radialer Richtung sind unipolar. Die Lauftrommel wird nur durch Druckkräfte belastet; es können keine Zugkräfte auftreten. Die lateralen Kräfte wechseln mit der Drehrichtung das Vorzeichen. Hystereseeffekte können hier die Messung vielmehr beeinträchtigen als bei der radialen Messung. Hinzu kommen mögliche Fehler durch mechanische Lose.

Viele Kraftaufnehmer haben Nichtlinearitäten nahe dem Nulldurchgang. Bei der vertikalen Aufhängung des Lastrades ist es daher von Nachteil, die Welle so in die Kraftaufnehmer einzubauen, dass das Lastrad im Ruhezustand in seinem vollen Gewicht auf der unteren Messdose steht und gleichsam kräftefrei in der oberen Messdose ruht.

Die übliche Vorgehensweise besteht deshalb darin, die Gewichtskraft des Lastrades zur Hälfte in der oberen Messdose und zur Hälfte in der unteren Messdose abzufangen. Hierzu wird mit einer mechanischen Einstellvorrichtung die obere Messdose so lange nach oben verstellt, bis die Hälfte der Gewichtskraft wirkt. Das Lastrad "steht" und "hängt" also jeweils zur Hälfte.

Daraus ergeben sich aber die folgenden Nachteile:
a) Die Messdosen sind in Ruhelage schon in der Größenordnung der zu messenden Kraft vorgespannt, d. h. der Messbereich muss doppelt so groß gewählt werden. Dies führt zu einer niedrigeren Auflösung und geringeren Messgenauigkeit. Außerdem ist der Preis der Messdosen höher.
b) In der Praxis ist die Verwendung einer Einstellvorrichtung für die Vorspannung mit Problemen verbunden. Die Einstellung ist schwierig. Die Achse des Lastrades muss absolut parallel zur Achse des Rades stehen, wenn man die Konizität messen will. Die Einstellvorrichtung bringt zusätzliche Lose in den mechanischen Aufbau und erschwert die parallele Ausrichtung.

Es sind auch Messvorrichtungen gemäß DE 101 38 846 A1 bekannt, bei denen die Drehachse der Laufrolle und die Drehachse der Tragspindel horizontal angeordnet sind. Die Messung der auftretenden Kräfte werden dabei an der Tragspindel gemessen, die nur einseitig gelagert ist und deshalb nur eine einseitige Messung der auftretenden Kräfte ermöglicht.

Es sind Messvorrichtungen der eingangs genannten Gattung beispielsweise gemäß DE 27 15 111 A1 und DE 24 01 279 Al sowie WO 88/03866 A oder US 4,173 850 A bekannt, bei denen die Drehachse der Laufrolle und die Drehachse der Tragspindel jeweils horizontal angeordnet sind und die auftretenden Kräfte an der Laufrolle gemessen werden können. Eine präzise Erfassung der auftretenden Kräfte wird jedoch dadurch erschwert, dass eine für die Messungen notwendige parallele Ausrichtung der beiden Drehachsen nicht zuverlässig sichergestellt ist und axiale Kräfte auftreten können, die nicht durch eine Abrollbewegung des Reifens erzeugt werden, sondern durch die fehlerhafte Anordnung der Drehachsen zueinander bedingt sind.

Aufgabe der Erfindung ist es daher, eine Gleichförmigkeits-Messmaschine der eingangs genannten Gattung so auszubilden, dass bei geringem Platzbedarf eine höhere Messgenauigkeit insbesondere für die Lateralkräfte erreicht wird. Dabei sollen die vorher genannten Nachteile überwunden werden.

Diese Aufgabe wird erfindungsgemäß dadurch gelöst, dass die Lauftrommel in einem im Maschinengestell vertikal verstellbaren Lauftrommelschlitten gelagert ist, dass die Trommelwellenlager jeweils über eines der Kraftmesselemente an dem Lauftrommelschlitten abgestützt sind und dass der Lauftrommelschlitten eine vertikale Schlittenplatte aufweist, die in vertikalen Führungsbahnen am Maschinengestell geführt ist, und dass von der Schlittenplatte zwei Kragarme vorspringen, die jeweils über ein Kraftmesselement ein Wellenlager der Trommelwelle tragen.

Durch die Anordnung des zu prüfenden Fahrzeugreifens über der Lauftrommel ergibt sich eine Bauart der Messmaschine mit geringem Platzbedarf. Die vorher beschriebenen Nachteile bei vertikaler Aufhängung des Lastrades werden vermieden. Bei horizontaler Lagerung der Lauftrommel wirkt nun die Gewichtskraft in radialer Richtung. Dort ist der Messbereich aber 10.000 N und somit liegt das Größenverhältnis zwischen der Messgröße und Störgröße bei etwa 10.000 zu 600 = 6 %. Dies liegt sogar noch im brauchbaren Überlastbereich der meisten Kraftaufnehmer.

Auf die Verwendung einer mechanischen Einstellvorrichtung für die Welle des Lastrades kann verzichtet werden, so dass keine Vorspannung der Messdosen erfolgt. Daher ist es nicht erforderlich, den Messbereich der Messdosen größer zu wählen als es für die Messung nötig ist. Dadurch erhält man eine höhere Auflösung und Genauigkeit der Kraftmessung.

Durch die Verwendung eines vertikal verstellbaren Lauftrommelschlittens, der eine vertikal verstellbare Schlittenplatte aufweist, von der die Kragarme zur Aufnahme der Lager der Lauftrommelwelle sowie der Kraftmesselemente vorspringen, wird in konstruktiv einfacher Weise sichergestellt, dass die Lauftrommelwelle immer exakt horizontal und damit parallel zu der Tragspindel des Laufrads gelagert ist.

Gemäß einer bevorzugten Ausführungsform der Erfindung ist vorgesehen, dass jedes Kraftmesselement einen die Lauftrommel stützenden Kraftaufnahmekörper aufweist, der über mindestens zwei horizontale, in vertikaler Richtung biegbare, Dehnungsmesselemente tragende Lenkerfedern mit mindestens einem Zwischenkörper verbunden ist, und dass der Zwischenkörper über eine vertikale, in Richtung der Drehachse der Lauftrommel biegbare, Dehnungsmesselemente tragende Lenkerfeder mit einem am Lauftrommelschlitten angebrachten Grundkörper verbunden ist.

Im Gegensatz zu herkömmlichen Kraftmessdosen ergibt sich bei dieser Ausführung der Kraftmesselemente eine kompakte, hoch belastbare Ausführung mit hoher Messempfindlichkeit. Die an den Kraftmesselementen vorgesehenen Lenkerfedern übernehmen bei sehr geringem Platzbedarf und hoher Belastbarkeit die Führung der Lauftrommellagerungen in den jeweiligen Messrichtungen. Die dabei benötigten Messwege sind äußerst gering, so dass die Lage und die Achsausrichtung der Lauftrommel durch die Messbewegungen nicht beeinträchtigt werden.

Weitere vorteilhafte Ausgestaltungen des Erfindungsgedankens sind Gegenstand weiterer Ansprüche.

Die Erfindung wird nachfolgend an einem Ausführungsbeispiel näher erläutert, das in der Zeichnung dargestellt ist. Es zeigt:
Fig. 1 eine Gleichförmigkeits-Messmaschine für Fahrzeugreifen in räumlicher Darstellungsweise, wobei Teile der Maschinenverkleidung weggelassen sind,
Fig. 2 einen Vertikalschnitt längs der Linie II-II in Fig. 1,
Fig. 3 in einer vergrößerten räumlichen Teildarstellung den die Lauftrommelachse tragenden Lauftrommelschlitten und
Fig. 4 in noch stärker vergrößerter räumlicher Darstellungsweise eines der beiden Kraftmesselemente der Gleichförmigkeits-Messmaschine nach den Fig. 1-3.

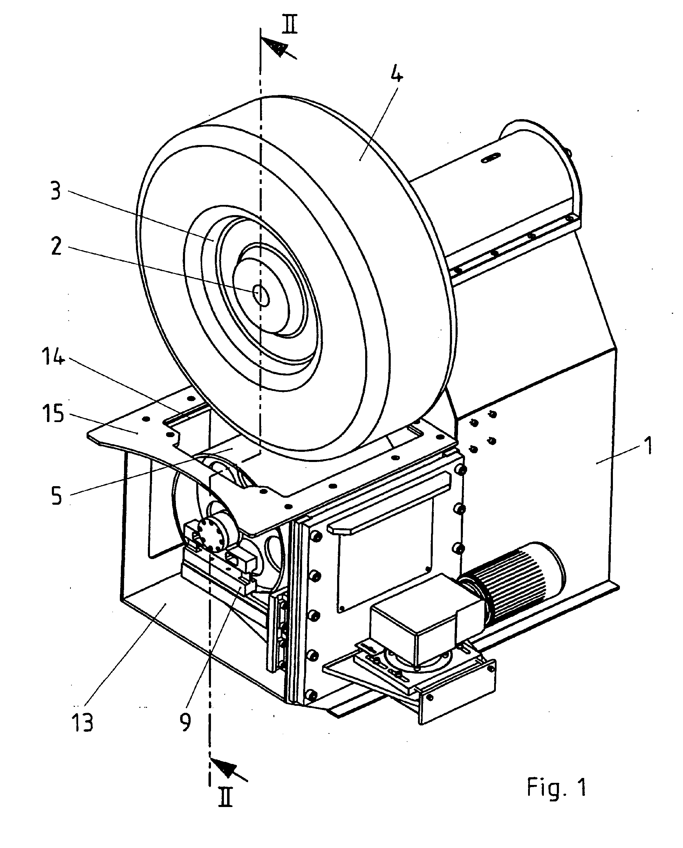

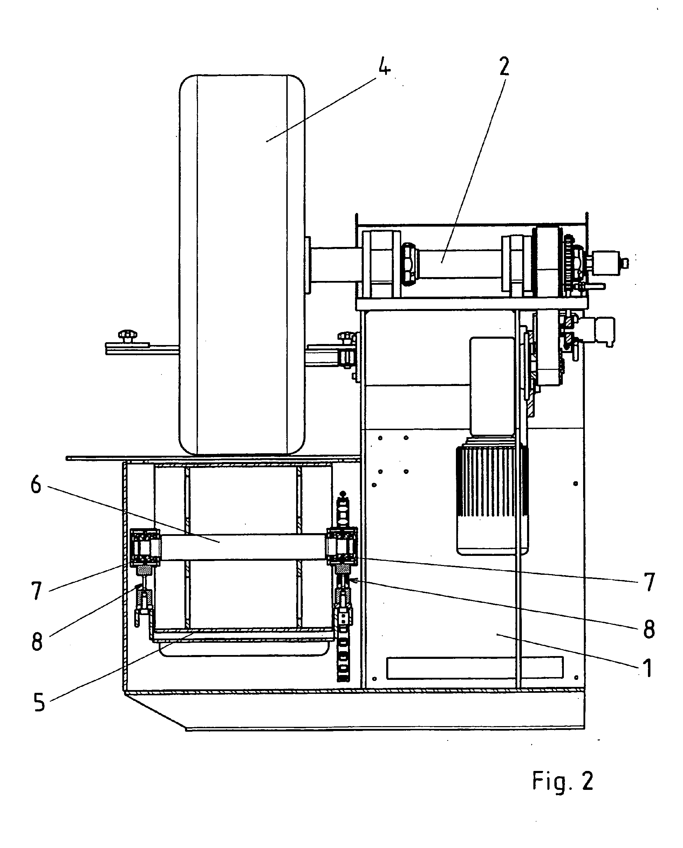

Die in den Fig. 1-3 dargestellte Gleichförmigkeits-Messmaschine dient zur Bestimmung von Radial- und Lateralkraftschwankungen von Fahrzeugreifen. Sie weist ein Maschinengestell 1 auf, in dem eine antreibbare horizontale Tragspindel 2 drehbar gelagert ist. An der Tragspindel 2 ist über eine Messfelge 3 ein zu prüfender Fahrzeugreifen 4 aufgenommen. Stattdessen kann unter Verzicht auf die Messfelge 3 auch ein komplett montiertes Fahrzeugrad aufgenommen werden.

Eine Lauftrommel 5, an deren zylindrischer Außenfläche der Fahrzeugreifen 4 abrollt, ist mit horizontaler Drehachse parallel und unter der Drehachse der Tragspindel 2 angeordnet. Die Drehachse der Lauftrommel 5 und die Drehachse der Tragspindel 2 liegen somit in einer gemeinsamen vertikalen Ebene, die der Schnittebene II-II entspricht.

Die Lauftrommel 5 weist eine Trommelwelle 6 auf, deren beide Trommelwellenlager 7 jeweils über ein Kraftmesselement 8 an einem Lauftrommelschlitten 9 abgestützt sind. Der Lauftrommelschlitten 9 ist im Maschinengestell 1 vertikal verstellbar.

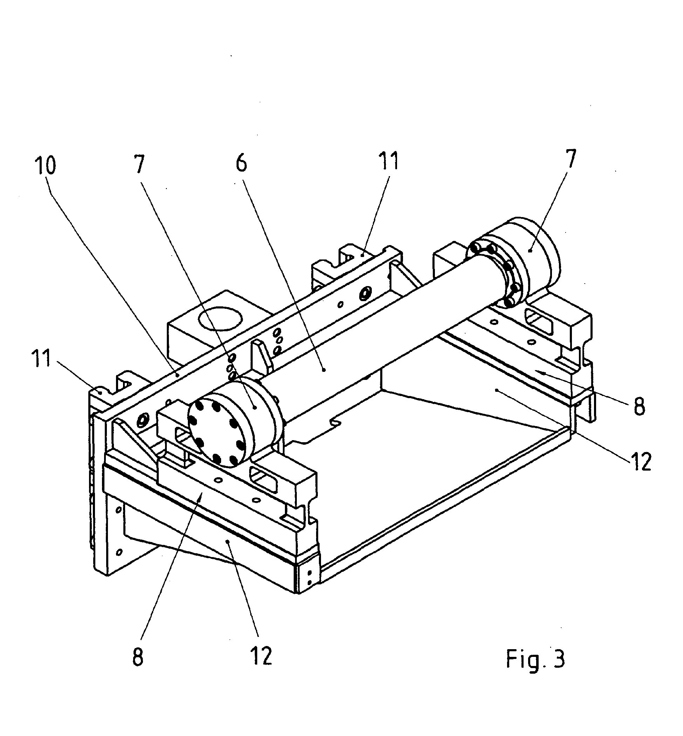

Hierzu weist der Lauftrommelschlitten 9 (Fig. 3) eine vertikale Schlittenplatte 10 auf, die in vertikalen Führungsbahnen 11 am Maschinengestell geführt ist. Von der Schlittenplatte 10 springen zwei Kragarme 12 vor, die jeweils über das zugeordnete Kraftmesselement 8 eines der beiden Wellenlager 7 der Trommelwelle 6 tragen.

Die Lauftrommel 5 ist mit dem sie tragenden Lauftrommelschlitten 9 in einem in Fig. 1 teilweise offen dargestellten Gehäuse 13 des Maschinengestells 1 angeordnet und ragt im angehobenen Zustand durch ein Fenster 14 in einer das Gehäuse 13 nach oben abschließenden horizontalen Maschinentischplatte 15.

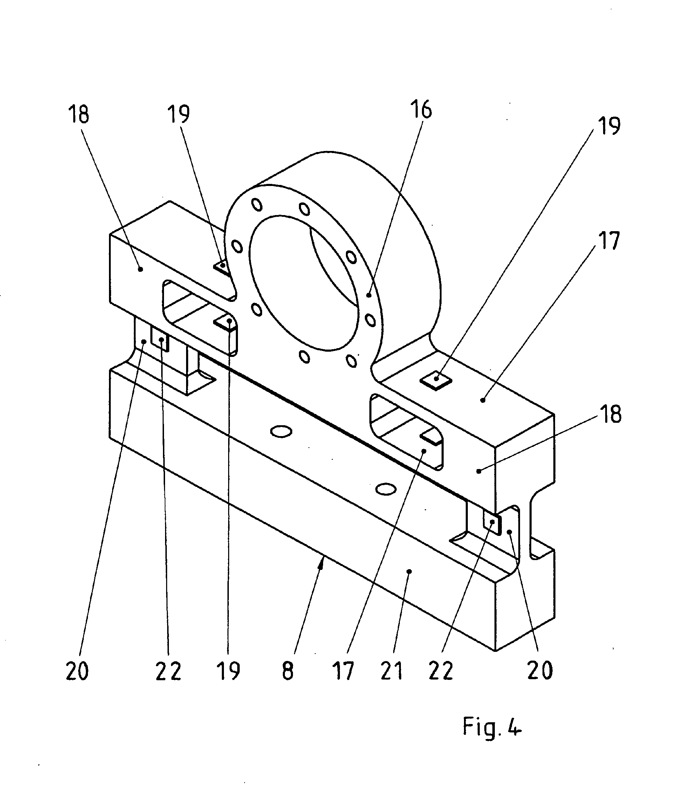

Wie in Fig. 4 in Einzelheiten dargestellt ist, weist jedes der beiden Kraftmesselemente 8 einen die Lagerung 7 der Lauftrommel 5 stützenden Kraftaufnahmekörper 16 auf, der auf jeder Seite über jeweils zwei horizontale, parallel zueinander angeordnete Lenkerfedern 17 mit jeweils einem Zwischenkörper 18 verbunden ist. Die horizontalen Lenkerfedern 17 sind in vertikaler Richtung biegbar und tragen Dehnungsmesselemente 19, die mit einer (nicht dargestellten) elektrischen Messbrückenschaltung verbunden sind.

Jeder der beiden Zwischenkörper 18 ist jeweils über eine vertikale Lenkerfeder 20 mit einem gemeinsamen, am Lauftrommelschlitten 9 angebrachten Grundkörper 21 verbunden. Die vertikalen, in Richtung der Drehachse der Lauftrommel 5 biegbaren Lenkerfedern 20 tragen ebenfalls Dehnungsmesselemente 22, die mit der Messbrückenschaltung verbunden sind.

Schwankungen der vom abrollenden Fahrzeugreifen 4 auf die Lauftrommel 5 ausgeübten Radialkräfte führen zu einer Verformung der horizontalen Lenkerfedern 17 und damit zu Widerstandsänderungen in den als Dehnungsmessstreifen ausgeführten Dehnungsmesselementen 19. Diese Widerstandsänderungen werden in der Messbrückenschaltung erfasst und ausgewertet.

Schwankungen der von dem abrollenden Fahrzeugreifen 4 auf die Lauftrommel 5 in Achsrichtung ausgeübten Lateralkräfte führen zu Verformungen der vertikalen Lenkerfedern 20 und dadurch zu Widerstandsänderungen in den als Dehnungsmessstreifen ausgeführten Dehnungsmesselementen 22. Diese Widerstandsänderungen werden ebenfalls in der Messbrückenschaltung ausgewertet.

## Patentansprüche

1. Gleichförmigkeits-Messmaschine zur Bestimmung von Radial- und Lateralkraftschwankungen von Fahrzeugreifen, die jeweils auf einer in einem Maschinengestell gelagerten, antreibbaren Tragspindel aufgenommen sind und an einer drehbaren Lauftrommel abrollen, die über Kraftmesselemente an dem Maschinengestell gelagert ist, wobei die Drehachse der Tragspindel (2) horizontal angeordnet ist, dass die Drehachse der Lauftrommel (5) horizontal in einer die Drehachse der Tragspindel (2) enthaltenden vertikalen Ebene unterhalb der Tragspindel (2) angeordnet ist, und dass die Lauftrommel (5) eine Trommelwelle (6) aufweist, deren beide Trommelwellenlager (7) jeweils über eines der Kraftmesselemente (8) abgestützt sind, **dadurch gekennzeichnet, dass** die Lauftrommel (5) in einem im Maschinengestell (1) vertikal verstellbaren Lauftrommelschlitten (9) gelagert ist, dass die Trommelwellenlager (7) jeweils über eines der Kraftmesselemente (8) an dem Lauftrommelschlitten (9) abgestützt sind und dass der Lauftrommelschlitten (9) eine vertikale Schlittenplatte (10) aufweist, die in vertikalen Führungsbahnen (11) am Maschinengestell (1) geführt ist, und dass von der Schlittenplatte (10) zwei Kragarme (12) vorspringen, die jeweils über ein Kraftmesselement (8) ein Wellenlager (7) der Trommelwelle (6) tragen.

2. Gleichförmigkeitsmessmaschine nach Anspruch 1, **dadurch gekennzeichnet, dass** jedes Kraftmesselement (8) einen die Lauftrommel (5) stützenden Kraftaufnahmekörper (16) aufweist, der über mindestens zwei horizontale, in vertikaler Richtung biegbare, Dehnungsmesselemente (19) tragende Lenkerfedern (17) mit mindestens einem Zwischenkörper (18) verbunden ist, und dass der Zwischenkörper (18) über eine vertikale, in Richtung der Drehachse der Lauftrommel (5) biegbare, Dehnungsmesselemente (22) tragende Lenkerfeder (20) mit einem am Lauftrommelschlitten (9) angebrachten Grundkörper (21) verbunden ist.

3. Gleichförmigkeitsmessmaschine nach Anspruch 2, **dadurch gekennzeichnet, dass** der Kraftaufnahmekörper (16) auf jeder Seite über jeweils zwei horizontale, parallel zueinander angeordnete Lenkerfedern (17) mit jeweils einem Zwischenkörper (18) verbunden ist und dass jeder der beiden Zwischenkörper (18) jeweils über eine vertikale Lenkerfeder (20) mit einem gemeinsamen Grundkörper (21) verbunden ist.

## Claims

1. Uniformity-measuring machine for determining radial and lateral force fluctuations of vehicle tyres which are in each case received on a drivable supporting spindle mounted in a machine frame and roll on a rotatable revolving drum which is mounted on the machine frame via force-measuring elements, wherein the axis of rotation of the supporting spindle (2) is arranged horizontally, wherein the axis of rotation of the revolving drum (5) is arranged horizontally below the supporting spindle (2) in a vertical plane containing the axis of rotation of the supporting spindle (2), and wherein the revolving drum (5) has a drum shaft (6) of which the two drum shaft bearings (7) are in each case supported by one of the force-measuring elements (8), **characterized in that** the revolving drum (5) is mounted in a revolving drum carriage (9) which is vertically adjustable in the machine frame (1), **in that** the drum shaft bearings (7) are in each case supported on the revolving drum carriage (9) by one of the force-measuring elements (8), and **in that** the revolving drum carriage (9) has a vertical carriage plate (10) which is guided in vertical guide paths (11) on the machine frame (1), and **in that** two cantilever arms (12) project from the carriage plate (10) and in each case bear a shaft bearing (7) of the drum shaft (6) via a force-measuring element (8).

2. Uniformity-measuring machine according to Claim 1, **characterized in that** each force-measuring element (8) has a force-absorbing body (16) which supports the revolving drum (5) and which is connected to at least one intermediate body (18) via at least two horizontal link springs (17) which can be bent in the vertical direction and which bear extension-measuring elements (19), and **in that** the intermediate body (18) is connected to a basic body (21) mounted on the revolving drum carriage (9) via a vertical link spring (20) which can be bent in the direction of the axis of rotation of the revolving drum (5) and which bears extension-measuring elements (22).

3. Uniformity-measuring machine according to Claim 2, **characterized in that** the force-absorbing body (16) is connected on each side to in each case an intermediate body (18) via in each case two horizontal link springs (17) arranged parallel to one another, and **in that** each of the two intermediate bodies (18) is in each case connected to a common basic body (21) via a vertical link spring (20).

## Revendications

1. Machine mesurant l'uniformité pour la détermination de fluctuations de forces radiales et latérales de pneumatiques de véhicules qui sont reçus respectivement sur une broche de support montée dans un bâti de machine et pouvant être entraînée et qui roulent sur un tambour de roulement rotatif qui est monté sur le bâti de machine par l'intermédiaire d'éléments de mesure de force, l'axe de rotation de la broche de support (2) étant disposé horizontalement, l'axe de rotation du tambour de roulement (5) étant disposé horizontalement en dessous de la broche de support (2) dans un plan vertical contenant l'axe de rotation de la broche de support (2), et le tambour de roulement (5) comprenant un arbre de tambour (6) dont les deux paliers d'arbre de tambour (7) sont supportés respectivement par l'intermédiaire de l'un des éléments de mesure de force (8), **caractérisée en ce que** le tambour de roulement (5) est monté dans un chariot de tambour de roulement (9) pouvant être déplacé verticalement dans le bâti de machine (1), **en ce que** les paliers d'arbre de tambour (7) s'appuient contre le chariot de tambour de roulement (9) respectivement par l'intermédiaire de l'un des éléments de mesure de force (8), **en ce que** le chariot de tambour de roulement (9) comprend une plaque de chariot verticale (10) qui est guidée sur le bâti de machine (1) dans des glissières de guidage verticales (11) et **en ce que** deux bras en porte-à-faux (12) font saillie à partir de la plaque de chariot (10), lesquels bras en porte-à-faux supportent un palier d'arbre (7) de l'arbre de tambour (6) par l'intermédiaire d'un élément de mesure de force respectif (8).

2. Machine mesurant l'uniformité selon la revendication 1, **caractérisée en ce que** chaque élément de mesure de force (8) comprend un corps de reprise de force (16) supportant le tambour de roulement (5), lequel corps de reprise de force est relié à au moins un corps intermédiaire (18) par l'intermédiaire d'au moins deux ressorts formant bras oscillant horizontaux (17) portant des éléments de mesure d'allongement (19) et flexibles dans la direction verticale, et **en ce que** le corps intermédiaire (18) est relié à un corps de base (21) monté sur le chariot de tambour de roulement (9), par l'intermédiaire d'un ressort formant bras oscillant vertical (20) portant des éléments de mesure d'allongement (22) et flexible en direction de l'axe de rotation du tambour de roulement (5).

3. Machine mesurant l'uniformité selon la revendication 2, **caractérisée en ce que** le corps de reprise de force (16) est relié de chaque côté à un corps intermédiaire respectif (18) par l'intermédiaire de deux ressorts formant bras oscillant horizontaux respectifs (17) disposés parallèlement l'un à l'autre et **en ce que** chacun des deux corps intermédiaires (18) est relié à un corps de base commun (21) par l'intermédiaire d'un ressort formant bras oscillant vertical respectif (20).
